# DEMANDE DE BREVET EUROPEEN

(11) **EP 2 153 897 A1**
(43) Date de publication de la demande: **17.02.2010**
(21) Numéro de dépôt: 09356046.4
(22) Date de dépôt: 21.07.2009
(51) Int. Cl.: B01J 35/00, B01J 37/00, C09C 1/36, C09D 5/00, C09D 183/04

(54) **Composition photocatalytique transparente pour éléments de construction intérieurs et extérieurs des bâtiments**

(30) Priorité: 25.07.2008 FR 0804228
(71) Demandeur: Neoformula Consulting & Développement, 38460 Soleymieu (FR)
(72) Inventeur: Stock, Claude, 38460 Soleymieu (FR)

(57) **Abrégé**

Composition photocatalytique transparente constituée par un sol de dioxyde de titane photocatalytique, un sol de silice possédant des propriétés autoliantes et un liant polymère filmogène hydrophile en dispersion ou en émulsion aqueuse et susceptible de former après séchage un film permettant sous l'action d'un rayonnement ultraviolet de type A de décomposer les matières organiques, le liant polymère filmogène hydrophile étant choisi dans le groupe formé par les polymères ou copolymères acryliques, styrène-acryliques, ou vinyliques ou leurs mélanges.

Procédé d'application de ladite composition photocatalytique sur les éléments de construction intérieurs et extérieurs des bâtiments.

## Description

La présente invention concerne la réalisation de compositions photocatalytiques transparentes destinées à servir de revêtements intérieurs ou extérieurs pour les murs, les plafonds, les toitures, les dallages et pavés, les terrasses, les toitures ainsi que toutes surfaces extérieures ou intérieures des bâtiments pouvant recevoir un revêtement ou une couche d'imprégnation.

Elle concerne également les procédés d'application desdites compositions photocatalytiques à l'aide des moyens d'application à disposition de l'homme de métier.

Actuellement, les revêtements photocatalytiques sont connus pour leurs qualités autonettoyantes, pour la destruction des polluants atmosphériques tels que les solvants organiques et les oxydes d'azote, ainsi que pour la destruction des bactéries, des microorganismes, algues et champignons divers, sous l'action des rayonnements ultraviolets.

De nombreuses solutions existent mettant en avant les qualités des revêtements à base de dioxyde de titane photocatalytique comprenant un liant organique ou minéral, cependant ces revêtements ne sont pas transparents.

En effet, les compositions photocatalytiques transparentes sont très délicates à mettre au point en particulier en raison de l'opacité du dioxyde de titane, des pigments et des charges, ainsi qu'à cause des incompatibilités entre les différents liants et additifs utilisés dans les peintures provoquant un blanchiment du film de peinture sec.

Le problème que se propose de résoudre l'invention est la réalisation d'un revêtement photocatalytique transparent pouvant être utilisé en intérieur comme en extérieur avec d'excellentes propriétés photocatalytiques et mécaniques à court terme comme à long terme.

Une solution connue selon le brevet FR2776944 propose l'utilisation d'un sol de silice comme liant des particules de dioxyde de titane. Les propriétés mécaniques à court terme d'un revêtement de ce type, lorsque le séchage à lieu à l'air, sont cependant insuffisantes pour éviter l'effritement du verni après application. D'autre part l'utilisation d'un liant organique seul ne peut être envisagée à l'extérieur car le polymère serait décomposé par la réaction de photocatalyse.

La présente invention a pour objet de remédier à ces inconvénients.

A cet effet, elle propose une composition photocatalytique comprenant au moins un sol de dioxyde de titane photocatalytique, un sol de silice possédant des propriétés autoliantes et un liant polymère filmogène hydrophile en dispersion ou en émulsion aqueuse.

Elle propose également un procédé permettant d'obtenir une surface photocatalytique, **caractérisé en ce que** l'on applique sur la surface à traiter la composition photocatalytique, ladite composition photocatalytique formant une couche adhérente à la surface des éléments à revêtir.

Par sol de dioxyde de titane on entend une dispersion colloïdale de dioxyde de titane, le dioxyde de titane pouvant être de forme anatase ou rutile. De préférence ledit sol de dioxyde de titane comprend des particules de taille comprise de 3 nm à 12 nm

Selon une caractéristique avantageuse de l'invention le dioxyde de titane est de forme anatase. Avantageusement le sol de dioxyde de titane est transparent.

Selon l'invention, le sol de dioxyde de titane est lié grâce à un sol de silice pour obtenir un revêtement ayant une bonne durabilité à long terme.

Par sol de silice on entend une dispersion colloïdale de silice de taille de particules comprise entre 8 et 40 nm, de préférence entre 15 et 30 nm, de préférence le sol de silice ne comprend pas de particules dont la taille est supérieure strictement à 40 nm. Avantageusement le sol de silice est transparent.

Les propriétés mécaniques immédiates, après séchage du revêtement, sont obtenues grâce à l'utilisation d'un liant polymère filmogène hydrophile.

Selon l'invention, le liant polymère filmogène hydrophile est choisi dans le groupe formé par les polymères ou copolymères acryliques, styrène-acryliques ou vinyliques ayant des propriétés de surface hydrophiles.

A titre d'exemple on peut citer :
- les polymères hydrophiles acryliques et styrène acrylique préparés à l'aide des monomomères suivants : l'acide acrylique, l'acide méthacrylique, le méthacrylate de méthyle, le méthacrylate d'éthyle, le méthacrylate d'éthylène glycol, l'acrylate de butyle, l'acrylate de 2-éthyle hexyle, le styrène ou l'acrylamide.
- les polymères vinyliques hydrophiles préparés à l'aide des monomères suivants : l'acétate de vinyle, le chlorure de vinyle, le propionate de vinyle, les versatates de vinyle ou l'éthylène.

Par hydrophile on entend qu'une goutte d'eau déminéralisée dont le volume est compris entre 5 et 50 µL, lorsqu'elle est déposée à la surface du film sec de liant pur forme un angle de contact interne α de moins de 90° (Fig1).

La figure 1 représente l'angle α formé entre ladite goutte d'eau déminéralisée et la surface du film sec de liant pur hydrophile.

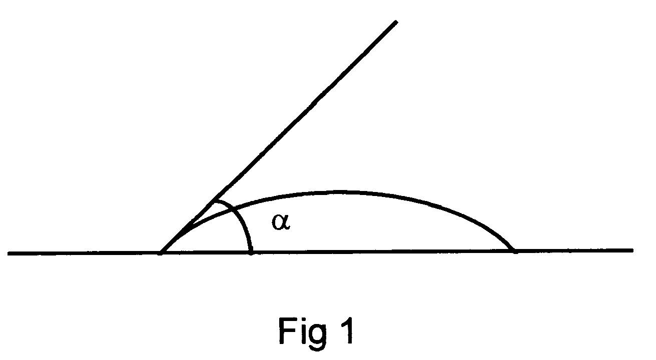

Par hydrophobe on entend qu'une goutte d'eau déminéralisée de volume compris entre 5 et 50 µL, lorsqu'elle est déposée à la surface du film sec de liant pur forme un angle de contact interne α de plus de 90° (Fig 2).

La figure 1 représente l'angle α formé entre ladite goutte d'eau déminéralisée et la surface du film sec de liant pur hydrophobe.

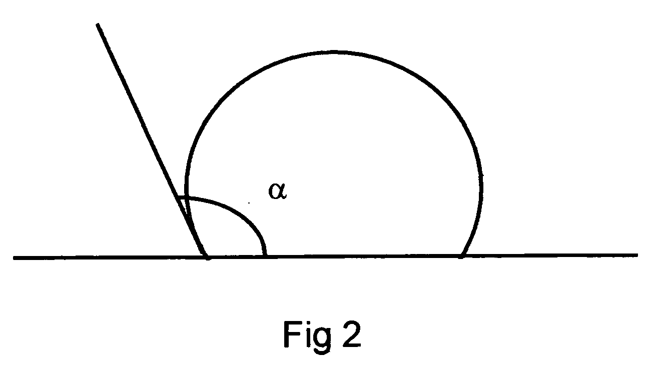

En particulier, sont exclus des compositions selon l'invention les liants hydrophobes tels que les résines fluorées, silicones, acryl vinyl acétate, acrylique uréthane, acrylique, epoxy, chlorure de vinyle acétate de vinyle, chlorure de vinylidène et latex SBR.

A titre d'exemple de résines fluorées hydrophobes exclues des compositions selon l'invention on peut citer les polymères comprenant un groupement fluoro tels que : les polytétrafluoroéthylène, polyfluorure de vinylidène, polyfluorure de vinyle, polyclororotrifluoroéthylène, copolymère de tétrafluoroéthylène et d'hexafluoropropylène, copolymère d'éthylène et de tétrafluoroéthylène, copolymère d'éthylène et de clororotrifluoroéthylène, copolymère de tétrafluoroéthylène et de perfluoroalkylvinyléther, perfluorocyclopolymère, copolymère de vinyléther et de fluorooléfine, copolymère de vinylester et de fluorooléfine, copolymère de tétrafluoroéthylène et de vinyléther, copolymère de clororotrifluoroéthylène et de vinyléther, polymère tétrafluoroéthylène uréthane réticulé, polymère tétrafluoroéthylène epoxy réticulé, polymère tétrafluoroéthylène acryl réticulé, polymère tétrafluoroéthylène mélamine réticulé.

A titre d'exemple de résines silicone hydrophobes exclues des compositions selon l'invention on peut citer les polymères issus de l'hydrolyse ou déshydratation condensation tels que : les méthyltriméthoxysilane, méthyltriéthoxysilane, méthyltrichlorosilane, méthyltribromosilane, méthyltriisopropoxysilane, méthyltri-t-butoxysilane, éthyltriméthoxysilane, éthyltriéthoxysilane, éthyltrichlorosilane, éthyltribromosilane, éthyltriisopropoxysilane, éthyltri-t-butoxysilane, n-propyltriméthoxysilane, n-propyltriéthoxysilane, n-propyltrichlorosilane, n-propyltribromosilane, n-hexyltriéthoxysilane, n-hexyltrichlorosilane, n-hexyltribromosilane, n-hexyltriisopropoxysilane, n-hexyltri-t-butoxysilane, n-décyltriméthoxysilane, n-décyltriéthoxysilane, n-décyltrichlorosilane, n-décyltribromosilane, n-décyltriisopropoxysilane, n-décyltri-t-butoxysilane, n-octatriméthoxysilane, n-octatriéthoxysilane, n-octatrichlorosilane, n-octatribromosilane, n-octatriisopropoxysilane, n-octatri-t-butoxysilane, phényltriméthoxysilane, phénylriéthoxysilane, phényltrichlorosilane, phényltribromosilane, phényltriisopropoxysilane, phényltri-t-butoxysilane, diméthyldichlorosilane, diméthyldibromosilane, diméthyldiméthoxysilane, diméthyldiéthoxysilane, diphényldichlorosilane, diphényldibromosilane, diphényldiméthoxysilane, diphényldiéthoxysilane, phénylméthyldichlorosilane, phénylméthyldibromosilane, phénylméthyldiméthoxysilane, phénylméthyldiéthoxysilane, vinyltrichlorosilane, vinyltribromosilane, vinylyltriméthoxysilane, vinyltriéthoxysilane, vinyltriisopropoxysilane, vinyltri-t-butoxysilane, trifluoropropyltrichlorosilane, trifluoropropyltribromosilane, trifluoropropyltriméthoxysilane, trifluoropropyltriéthoxysilane, trifluoropropyltriisopropoxysilane, trifluoropropyl-t-butoxysilane, γ-glicydoxypropylméthyldiméthoxysilane, γ-glicydoxypropylméthyldiéthoxysilane, γ-glicydoxypropyltriméthoxysilane, γ-glicydoxypropyltriéthoxysilane, γ-glicydoxypropyltriisopropoxysilane, γ-glicydoxypropyltri-t-butoxysilane, γ-méthacryloxypropylméthyldiméthoxysilane, y-mêthacryloxypropylméthyldiéthoxysilane, γ-méthacryloxypropyltriméthoxysilane, γ-méthacryloxypropyltriéthoxysilane, γ-méthacryloxypropyltriisopropoxysilane, γméthacryloxypropyltri-t-butoxysilane, γ-aminopropylméthyldiméthoxysilane, γ-aminopropylméthyldiéthoxysilane, γ-aminopropyltriméthoxysilane, γ-aminopropyltriéthoxysilane, γ-aminopropyltriisopropoxysilane, γ-aminométhacryloxypropyltri-t-butoxysilane, γ-méthylcaptopropylméthyldiméthoxysilane, γ-méthylcaptopropyléthyldiméthoxysilane, γ-méthylcaptopropyltriméthoxysilane, γ-méthylcaptopropyltriéthoxysilane, γ-méthylcaptopropyltriisopropoxysilane, γ-méthylcaptopropyltri-t-butoxy-silane, β-(3,4-epoxycyclohexyl)éthyltriméthoxysilane et β-(3,4-epoxycyclohexyl)-éthyltriéthoxysilane.

Selon une caractéristique de l'invention, la composition comprend au moins en proportions pondérales :
- de 2% à 10 %, de préférence de 3% à 8% de sol de dioxyde de titane calculé en matière sèche
- de 5% à 20%, de préférence de 8% à 15% de sol de silice calculé en matière sèche
- de 5% à 20%, de préférence de 8% à 15% de liant polymère filmogène hydrophile calculé en matière sèche

Selon une autre caractéristique de l'invention la composition comprend également des charges minérales transparentes et/où des pigments minéraux transparents ne modifiant pas les caractéristiques de transparence du revêtement après séchage du film.

Par revêtement transparent selon l'invention on entend une composition qui, après séchage, lorsqu'elle est appliquée à une épaisseur humide de 50 µm sur une carte contraste noir et blanc montre un rapport de contraste inférieur à 8% préférentiellement inférieur à 6%.

La mesure du rapport de contraste est réalisée selon la norme EN ISO 6504-3 « Peintures et Vernis - Détermination du pouvoir masquant -

Partie 3 :
Détermination du rapport de contraste des peintures claires à un rendement surfacique déterminé ».

Les essais sont effectués suivant la méthode B décrite dans ladite norme, l'épaisseur sèche du film est dépendante de l'extrait sec de la composition photocatalytique.

La transparence du revêtement est particulièrement difficile à obtenir et dépend fortement des pigments et charges incorporées dans la composition ainsi que des polymères et des additifs.

Les pigments minéraux ne sont pas décomposés par la réaction de photocatalyse et ont pour fonction de colorer la composition et ainsi permettre de réaliser un revêtement coloré permettant de modifier l'esthétique du support.

Les charges minérales transparentes permettent d'abaisser le coût de la composition et de faciliter son séchage.

Les charges minérales ajoutées à la composition peuvent avantageusement être choisies parmi les charges transparentes telles que le feldspath, les billes de verre transparentes, le verre broyé ainsi que leurs mélanges.

Sont exclus des compositions selon l'invention les charges et pigments opacifiants tels que le dioxyde de titane opacifiant utilisé dans les peintures ainsi que tout dioxyde de titane photocatalytique sec sous forme pulvérulente, le blanc de zinc, le blanc d'alumine, les chromates de plomb, le chromate de zinc, le sulfure de zinc, les jaunes et rouges de cadmium, les sulfates tels que la baryte et le sulfate de baryum précipité, les carbonates de calcium broyés et le carbonate de calcium précipité, les silicates tels que les silicates hydratés et argiles, le carbone tel que le noir de carbone, les poudres métalliques telles que la poudre d'aluminium, la poudre de bronze et la poudre de zinc, les « pearl pigments » tels que le « titaned mica ».

Selon une autre caractéristique de l'invention, la composition peut comprendre des additifs de conformation couramment utilisés dans l'industrie des peintures et vernis comme des agents antimousse, des agents dispersants, des agents mouillants, des agents épaississants, des coalescents, des agents de conservation ou leurs mélanges.

Ces additifs doivent êtres choisis de manière à ne pas affecter la transparence de la composition, ainsi certaines argiles ne peuvent-elles pas être utilisées en tant qu'agent épaississant car elles provoquent un blanchiment du film sec.

Selon une caractéristique particulièrement avantageuse de l'invention, la composition comprend en proportions pondérales :
- de 0 à 1% d'agent mouillant
- de 0 à 1% d'agent antimousse
- de 0 à 4% d'agent coalescent
- de 0 à 20% de charges minérales
- de 0 à 2% de pigment
- de 0 à 0,5% d'agent biocide.

Les différentes matières premières sont mélangées entre-elles à l'aide des moyens conventionnels utilisés par l'homme du métier jusqu'à l'obtention d'un mélange homogène selon les méthodes habituelles de production d'une peinture ou d'un verni.

La dispersion ainsi obtenue, selon l'invention, peut être conservée en récipient clos et stockée plusieurs mois voire plusieurs années sans problème particulier de sédimentation, de ségrégation ou de dégradation bactérienne.

De préférence la composition selon l'invention ne présente pas de séparation de phase et reste homogène.

Pour que le procédé conforme à l'invention puisse donner entière satisfaction il est nécessaire d'appliquer la composition sur les éléments de construction des bâtiments à l'aide des moyens conventionnels d'application connus par l'homme du métier tels que par exemple, la brosse, le rouleau, la pulvérisation à l'aide d'un moyen de type pneumatique ou non, haute, moyenne ou basse pression comme un pistolet pneumatique, un pistolet moyenne pression de type Airmix®, ou encore à l'aide d'un pistolet de type Airless®.

Après séchage, le film obtenu recouvre la surface des éléments intérieurs ou extérieurs des bâtiments.

Le procédé selon l'invention permet avantageusement de revêtir des éléments choisis dans le groupe comprenant les éléments de construction intérieurs et extérieurs des bâtiments.

A titre d'exemple on peut citer, comme support, les murs intérieurs ou extérieurs des bâtiments, les plafonds, les dallages intérieurs et extérieurs, les pavés, les margelles de piscine, les tuiles et tout autre élément de construction intérieur ou extérieur.

Selon l'invention, on applique de préférence entre 20 ml et 100 ml, préférentiellement de 40 ml à 80 ml de composition photocatalytique par mètre carré de surface à recouvrir.

A l'application cette composition s'étale de manière homogène sur la surface à revêtir et forme après séchage un film dont l'épaisseur est en règle générale comprise entre 10 et 50 µm.

Le film ainsi obtenu selon les compositions et le procédé selon l'invention présente alors de bonnes caractéristiques mécaniques et des propriétés photocatalytiques.

En effet, ce film lorsqu'il est soumis à un rayonnement ultraviolet de type A, sous l'effet du rayonnement solaire ou d'un rayonnement artificiel permet la décomposition des matières organiques telles que les solvants organiques contenus dans l'atmosphère ainsi que les oxydes d'azote.

A titre d'exemple, on peut citer comme source de rayonnement artificiel des lampes de type UVA disponibles dans le commerce sous l'appellation black light ou black light blue ou encore les lampes d'éclairage courantes de type halogène ou les tubes fluorescents.

De même, l'effet photocatalytique empêche ou retarde la formation d'algues de mousses et de champignons à la surface des éléments de construction empêchant ainsi un encrassement trop rapide des surfaces.

L'effet photocatalytique permet également de dégrader sous l'effet du rayonnement ultraviolet les taches de nature organique qui pourraient être faites sur les éléments telles que, à titre d'exemple, des taches d'huile minérale ou végétale, de vin, de cire et autres colorants organiques.

En milieu hospitalier, la composition peut être utilisée pour détruire les bactéries et virus et autres microorganismes et facilite ainsi les opérations de nettoyage et de désinfection des chambres et des salles d'opération.

Les caractéristiques du procédé et du revêtement photocatalytique transparent qui font l'objet de l'invention seront décrites plus en détail en se référant aux exemples ci-dessous de compositions pouvant être appliquées par le procédé conforme à l'invention.

### EXEMPLE 1

Des films sont réalisés en appliquant des polymères de différentes natures chimiques sur un support constitué d'une plaque de verre à l'aide d'une applicateur de peinture de laboratoire à une épaisseur de 100 µm humide.

Les plaques sont séchées à une température de 20°C et 50% d'humidité relative pendant 24h.

Des mesures d'angle de contact sont réalisées à l'aide d'un goniomètre de laboratoire après avoir déposé une goutte de 25 µL d'eau déminéralisée à la surface du film.

| **Polymères selon l'invention** | **Fournisseur** | **Angle de contact** α |
|---|---|---|
| Acronal S 559 | BASF | 15° |
| Acronal A 754 | BASF | 50° |
| Acronal S 790 | BASF | 70° |
| Vinnapas CEF 52W | Wacker Chemie | 40° |
| Acronal 290D | BASF | 70° |

| **Polymères exclus de l'invention** | **Fournisseur** | **Angle de contact** α |
|---|---|---|
| Asahi Guard AG 3700 | AGC Chemicals Europe | 130° |
| Silres HP 2000 | Wacker Chemie | 120° |
| Silres BS 45 | Wacker Chemie | 120° |

### EXEMPLE 2

| **Compositions massiques selon l'invention** | | **Fournisseur** | **Formule 1** | **Formule 2** | **Formule 3** | **Formule 4** |
|---|---|---|---|---|---|---|
| Solvant | Eau | | 523,00 | 413,00 | 303,00 | 193,00 |
| Agent mouillant | Envirogem E 360 | Air Products | 10,00 | 10,00 | 10,00 | 10,00 |
| Agent antimousse | Tegofoam 825 | Tego | 4,00 | 4,00 | 4,00 | 4,00 |
| Sol de dioxyde de titane | Millenium S 5-300 | Millenium | 200,00 | 200,00 | 200,00 | 200,00 |
| Sol de silice | Betol KS 402 | Woellner | 150,00 | 150,00 | 150,00 | 150,00 |
| Polymère filmogène hydrophile | Acronal A 754 | BASF | 100,00 | 200,00 | 300,00 | 400,00 |
| Agent coalescent | Dowanol DPNP | Dow Chemicals | 10,00 | 20,00 | 30,00 | 40,00 |
| Biocide | Acticide MBS | Thor | 3,00 | 3,00 | 3,00 | 3,00 |
| Total | | | 1000,00 | 1000,00 | 1000,00 | 1000,00 |
| Rapport de contraste | | | 4,7% | 4,7% | 5,5% | 5,3% |

### EXEMPLE 3

| **Composition selon l'invention** | | **Fournisseur** | **Masse en g** | **% en masse** |
|---|---|---|---|---|
| Solvant | Eau | | 510,00 | 51,00 |
| Agent mouillant | Envirogem 360 | Air Products | 2,00 | 0,20 |
| Agent antimousse | Clerol PLB 847 | Cognis | 2,00 | 0,20 |
| Sol de dioxyde de titane | Millenium S 5-300 | Millenium | 200,00 | 20,00 |
| Polymère filmogène hydrophile | Acronal S 790 | BASF | 100,00 | 10,00 |
| Sol de silice | Betol KS 402 | Woellner | 150,00 | 15,00 |
| Agent coalescent | Dowanol DPNP | Dow Chemicals | 8,00 | 0,80 |
| Agent épaississant | Rhéolate 678 | Elementis | 25,00 | 2,50 |
| Biocide | Acticide MBS | Thor | 3,00 | 0,30 |
| Total | | | 1000,00 | 100,00 |

### EXEMPLE 4

| **Composition selon l'invention** | | **Fournisseur** | **Masse en g** | **% en masse** |
|---|---|---|---|---|
| Solvant | Eau | | 320,00 | 32,00 |
| Agent mouillant | Envirogem 360 | Air Products | 3,00 | 0,30 |
| Agent antimousse | Clerol NXZ | Cognis | 1,00 | 0,10 |
| Sol de dioxyde de titane | Millenium S 5-300 | Millenium | 250,00 | 25,00 |
| Polymère filmogène hydrophile | Acronal S 790 | BASF | 100,00 | 10,00 |
| Sol de silice | Betol KS 402 | Woellner | 200,00 | 20,00 |
| Agent d'imprégnation silicone | Baysilone WA | Momentive | 100,00 | 10,00 |
| Agent coalescent | Dowanol DPNP | Dow Chemicals | 8,00 | 0,80 |
| Agent épaississant | Rhéolate 678 | Elementis | 15,00 | 1,50 |
| Biocide | Acticide MBS | Thor | 3,00 | 0,30 |
| Total | | | 1 000,00 | 100,00 |

### EXEMPLE 5

| **Composition selon l'invention** | | **Fournisseur** | **Masse en g** | **% en masse** |
|---|---|---|---|---|
| Solvant | Eau | | 184,00 | 18,40 |
| Agent mouillant | Envirogem 360 | Air Products | 2,00 | 0,20 |
| Agent antimousse | Clerol NDW | Cognis | 1,00 | 0,10 |
| Sol de dioxyde de titane | Millenium S 5-300 | Millenium | 300,00 | 30,00 |
| Polymère filmogène hydrophile | Acronal S 559 | BASF | 150,00 | 15,00 |
| Sol de silice | Betol KS 402 | Woellner | 200,00 | 20,00 |
| Emulsion de silicone | Silres BS 1306 | Wacker | 150,00 | 15,00 |
| Agent épaississant | Rhéolate 678 | Elementis | 10,00 | 1,00 |
| Biocide | Acticide MBS | Thor | 3,00 | 0,30 |
| Total | | | 1 000,00 | 100,00 |

### EXEMPLE 6

| **Composition selon l'invention** | | **Fournisseur** | **Masse en g** | **% en masse** |
|---|---|---|---|---|
| Solvant | Eau | | 428,00 | 42,80 |
| Agent mouillant | Envirogem 360 | Air Products | 3,00 | 0,30 |
| Agent antimousse | Clerol NXZ | Cognis | 1,00 | 0,10 |
| Sol de dioxyde de titane | Millenium S 5-300 | Millenium | 200,00 | 20,00 |
| Polymère filmogène hydrophile | Vinnapas CEF52W | Wacker | 100,00 | 10,00 |
| Sol de silice | Betol KS 402 | Woellner | 150,00 | 15,00 |
| Emulsion de silicone | Silres BS 1306 | Wacker | 100,00 | 10,00 |
| Agent épaississant | Rhéolate 678 | Elementis | 15,00 | 1,50 |
| Biocide | Acticide MBS | Thor | 3,00 | 0,30 |
| Total | | | 1 000,00 | 100,00 |

### EXEMPLE 7

| **Composition selon l'invention** | | **Fournisseur** | **Masse en g** | **% en masse** |
|---|---|---|---|---|
| Solvant | Eau | | 234,00 | 23,40 |
| Agent mouillant | Envirogem 360 | Air Products | 10,00 | 1,00 |
| Agent antimousse | Tegofoamex 825 | Tego | 3,00 | 0,30 |
| Sol de dioxyde de titane | Millenium S 5-300 | Millenium | 200,00 | 20,00 |
| Polymère filmogène hydrophile | Acronal A 754 | BASF | 300,00 | 30,00 |
| Sol de silice | Betol KS 402 | Woellner | 150,00 | 15,00 |
| Agent d'imprégnation silicone | Baysilone WA | Momentive | 80,00 | 8,00 |
| Agent coalescent | Dowanol DPNB | Dow Chemicals | 20,00 | 2,00 |
| Biocide | Acticide MBS | Thor | 3,00 | 0,30 |
| Total | | | 1 000,00 | 100,00 |

Il est à noter que les différents constituants de ces compositions sont désignés sous leur référence commerciale.

Les natures chimiques de ces constituants sont les suivantes :
Envirogem 360 : Agent mouillant : produit de réaction de l'octanol 1 avec l'épichlorhydrine et le 2-mercaptoéthanol
Acronal S790 : Dispersion aqueuse de styrène acrylique
Acronal A754 : Dispersion aqueuse de copolymère d'esters acryliques
Acronal S559 : Dispersion aqueuse de styrène acrylique
Acronal A 754 : Dispersion aqueuse de copolymère d'esters acryliques
Vinnapas CEF 52W : Dispersion de copolymère d'acétate de vinyle et de chlorure de vinyle
Asahi Guard AG 3700 : Copolymère de fluoro alkyl acrylate
Silres HP 2000 : Polyphénylméthylsiloxane
Clerol NDW : agent antimousse de type huile minérale et silice
Clerol NXZ : agent antimousse de type huile minérale et silice
Clerol PLB 847 : agent antimousse copolymère d'oxyde d'éthylène et d'oxyde de propylène
Tegofoamex 825 : agent antimousse sur bas silicone
Millénium S5-300 B : Sol de dioxyde de titane photocatalytique
Betol KS 402 : Sol de silice
Silres BS 45 : émulsion de silicone
Silres BS 1306 : émulsion de silicone
Baysilone émulsion WA : agent d'imprégnation silicone
Rhéolate 678 : agent épaississant polyuréthane
Acticide MBS : Microbiocide à base d'izotiazolone
Dowanol DPNP : éther de glycol
Dowanol DPNB : éther de glycol

L'exemple 1 montre comment effectuer la sélection des polymères hydrophiles permettant de réaliser les compositions selon l'invention.

Les compositions conformes à l'exemple 2 montrent la transparence desdites compostions, quelque soit la concentration en liant polymère filmogène hydrophile de ces formules.

La composition conforme à l'exemple 3 est particulièrement avantageuse dans la mesure où elle peut être utilisée en intérieur pour l'amélioration de la qualité de l'air

Les compositions conforme à l'exemple 4 et 7 sont particulièrement avantageuses dans la mesure où elle comportent en plus un agent d'imprégnation silicone et limitent ainsi l'encrassement et la tachabilité du support.

Les compositions 5 et 6 sont particulièrement avantageuses dans la mesure où elles ne nécessitent pas l'utilisation d'un agent de coalescence et sont donc exemptes de solvant organique.

## Revendications

1. Composition photocatalytique transparente
**caractérisée en ce que**
la composition photocatalytique transparente comprend au moins un sol de dioxyde de titane photocatalytique, un sol de silice possédant des propriétés autoliantes de taille de particules comprise entre 8 et 40 nm, un liant polymère filmogène hydrophile en dispersion ou en émulsion aqueuse et ne comprend pas de pigment opacifiant.

2. Composition photocatalytique transparente selon la revendication 1,
**caractérisée en ce que**
le liant polymère filmogène hydrophile est choisi dans le groupe formé par les polymères ou copolymères acryliques, styrène-acryliques ou vinyliques.

3. Composition photocatalytique transparente selon les revendications 1 et 2,
**caractérisée en ce que**
la composition comprend des charges minérales transparentes.

4. Composition photocatalytique transparente selon la revendication 3,
**caractérisée en ce que**
la composition photocatalytique comprend des charges minérales transparentes choisies dans le groupe formé par le feldspath, les billes de verre tranparentes, le verre broyé, et leurs mélanges.

5. Composition photocatalytique transparente selon l'une quelconque des revendications 1 à 4,
**caractérisée en ce que**
la composition photocatalytique comprend des additifs de conformation de préférence choisis dans le groupe constitué par les agents antimousse, les agents dispersants, les agents mouillants, les agents épaississants, les coalescents, les agents de conservation ou leurs mélanges.

6. Composition photocatalytique transparente selon l'une quelconque des revendications 1 à 5,
**caractérisée en ce que** la composition photocatalytique comprend au moins en proportions pondérales :
- de 2% à 10 %, de préférence de 3% à 8% de sol de dioxyde de titane calculé en matière sèche
- de 5% à 20%, de préférence de 8% à 15% de sol de silice calculé en matière sèche
- de 5% à 20%, de préférence de 8% à 15% de liant filmogène calculé en matière active

7. Composition photocatalytique transparente selon la revendication 1,
**caractérisée en ce que**
la composition photocatalytique comprend en proportions pondérales :
- de 0 à 1% d'agent mouillant
- de 0 à 1% d'agent antimousse
- de 0 à 4% d'agent coalescent
- de 0 à 20% de charges minérales
- de 0 à 2% de pigment
- de 0 à 0,5% d'agent biocide

8. Procédé d'application de la composition photocatalytique selon l'une quelconque des revendications 1 à 7,
**caractérisé en ce que**
l'on applique de 20 ml à 100 ml, préférentiellement de 40 ml à 80 ml de composition photocatalytique par mètre carré de surface à recouvrir.

9. Procédé selon la revendication 8,
**caractérisé en ce que**
les éléments à revêtir sont choisis dans le groupe comprenant les éléments de construction intérieurs et extérieurs des bâtiments.

10. Procédé selon la revendication 8 ou 9,
**caractérisé en ce que**
l'application est réalisée à la brosse, au rouleau ou à l'aide d'un moyen de pulvérisation haute, moyenne ou basse pression
